(19) **Europäisches Patentamt**
**European Patent Office**
**Office européen des brevets**

(11) **EP 3 432 682 B1**

(12) **EUROPEAN PATENT SPECIFICATION**

(45) Date of publication and mention
of the grant of the patent:
**08.04.2026 Bulletin 2026/15**

(51) International Patent Classification (IPC):
*H05B 6/06* $^{(2006.01)}$     *H05B 6/12* $^{(2006.01)}$

(21) Application number: **17181987.3**

(52) Cooperative Patent Classification (CPC):
**H05B 6/065; H05B 6/1272;** H05B 2213/03;
Y02B 40/00

(22) Date of filing: **18.07.2017**

(54) **METHOD FOR OPERATING AN INDUCTION COOKING HOB AND COOKING HOB USING SUCH METHOD**

VERFAHREN ZUM BETREIBEN EINES INDUKTIONSKOCHFELDS UND KOCHFELD MIT DIESEM VERFAHREN

PROCÉDÉ DE FONCTIONNEMENT D'UNE PLAQUE DE CUISSON PAR INDUCTION ET PLAQUE DE CUISSON FAISANT APPEL À UN TEL PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.01.2019 Bulletin 2019/04**

(73) Proprietor: **Whirlpool Corporation**
**Benton Harbor, MI 49022 (US)**

(72) Inventors:
• **Calesella, Carlo**
**21025 Comerio (IT)**

• **Parachini, Davide**
**21025 Comerio (IT)**
• **Pastore, Cristiano Vito**
**21025 Comerio (IT)**

(74) Representative: **PGA S.p.A., Milano, Succursale di Lugano**
**Via Castagnola, 21c**
**6900 Lugano (CH)**

(56) References cited:
**EP-A1- 2 252 130        EP-A1- 2 416 621**
**EP-A1- 2 914 059        EP-A1- 3 116 288**
**WO-A1-97/37515        US-A1- 2011 240 632**
**US-A1- 2011 272 397**

**Description**

The present invention relates to a method for operating an induction cooking hob comprising a plurality of inductors in association with induction resonant inverters supplied by a common rectifying circuit so that a multi-zone induction cooking hob is provided. In addition the present invention relates to an induction cooking hob as well, comprising a plurality of inductors each associated with an induction resonant inverter supplied by a common rectifying circuit so that a multi-zone induction cooking hob and a control system for driving said resonant inverters is provided.

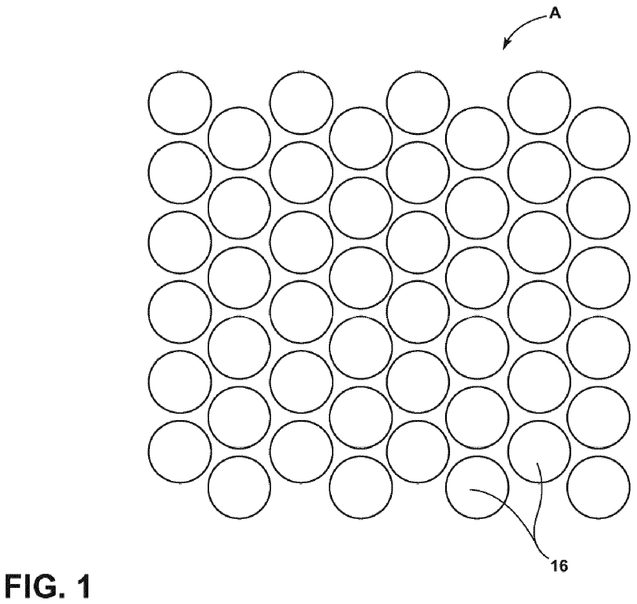

Such kind of cooking hob is disclosed by EP 2252130, and it is also known as "flexible induction cooktop" or "induction cookanywhere", which is characterized by having a large number of induction coils, whose dimensions are typically smaller than the size of the cooking vessel and these coils are distributed next to each other to form a bi-dimensional array A (as shown in Figure 1).

One known drawback of induction cooking hobs of the above type is the need of supplying and controlling a large number of induction coils with respect to the typical 3 to 6 coils, which are usually fed by a corresponding number of high frequency inverters.

Having a larger number of electrical loads translates into a system cost significantly higher than conventional hobs; for that reason, the market penetration of this kind of cooking hobs has been very low since its introduction about a decade ago.

One of the first patents related to "flexible induction cooktops" dates back to 1997 (WO1997037515A1). This document describes both the bi-dimensional array of induction cells and a user interface that allows clustering a number of cells together to energize a pot.

The subsequent state of the art, aimed at feeding high frequency current to a large number of induction coils, can be classified into two basic solutions: one solution consists in having as many inverters as the number of induction coils (as in EP2252130 mentioned above), and the second consists in having a lower number of inverters shared among multiple coils through a multiplexing network.

It is clear that the first solution is particularly expensive, as it requires a large number of micro-inverters, each endowed with all the necessary functions for the normal operation of an induction system (pan detection, closed loop PWM control, current protections, etc.). On the other hand, if the second solution enjoys a reduction in number of inverters, nevertheless it still needs an expensive and bulky network of static switches whose individual cost is sometimes similar to that of many micro-inverters.

The present invention falls within the above first class of solutions (plurality of micro inverters). Therefore we will not mention here any of the known prior art aimed at multiplexing the number of outputs of high frequency inverters through the use of static switches such as mechanical or solid state relays.

EP2095686 discloses an induction cooking device circuit, with a set of inverters for generating a heating frequency and with at least one frequency processing unit for modifying at least one frequency of a signal, which is connected upstream of the inverters, wherein at least three inverters are assigned to the frequency processing unit. The frequency processing unit has a maximum power, which is configured to be lower than the power of the set of inverters. The vast majority of the induction cooktops commercialized before the filing date of such document were based on PCB assemblies made up of two inverters having power rating comprised between 2500 W and 3200 W each and a total rating of 3600 W.

EP2352359 discloses an induction hob having a plurality of induction heating elements, a control unit which is designed to operate a number of induction heating elements to heat at least one flexibly definable heating zone in a synchronized manner and a measurement array for measuring a heating power generated by the induction heating elements, the measurement array being designed to measure a sum of the heating powers of at least two induction heating elements, wherein the control unit is designed to use the sum of the heating powers to regulate the heating power, and wherein the control unit is also designed to operate a number of groups of induction heating elements simultaneously with an inverter in at least one operating state.

This document shows the solution of clusters of multiple inverters sharing the same (input) current measurement. However by the definition of measurement array, there must be multiple current measurement devices and the sum is to be performed afterwards. This would rule out the case of a single measurement device placed before the array of inverters.

US2010282740 discloses an array of inverters endowed with a common power measuring stage adapted to measure the sum of the power of all the individual inverters, when they operate in a synchronized manner.

As better explained in the following description, in the system according to the present invention a maximum of one inductor is preferably operating at any given moment for each sub-assembly of inductors. Therefore the synchronization of cells is not even definable within the sub-assembly. Moreover, in the technical solution according to the invention, the power measured is coinciding with the power of the only cell operating at any given moment (no summation can be defined if there are less than 2 addends). WO2016/010492 A1 discloses a structure which presents similarities with the string of micro-inverters according to the present invention. However, there are several features in the disclosure which are missing in the system according to the present invention, namely the determination of a master inductor and the determination of a common switching frequency to be applicable to all the inductors of the induction cooking hob.

EP2416621, upon the disclosure of which the preamble of the independent claims is drafted, discloses a cooking hob having plurality of inductors divided in assemblies, at least one controller configured to independently drive each resonant inverter and a control system coupled to the controller.

US2011/240632 discloses a cooking hob having multiple inductors and at least three heating zones which are operated by the inductors. A single power electronics subassembly supplies the inductors with heating current and includes a common rectifier which is operably connected to the inductors for rectifying an alternating current supplied by a single phase of a household electrical system.

EP2914059 discloses an induction heating device generating no interference sound even when a high-frequency power is supplied to a plurality of heating coils.

US2011/272397 discloses a cooking hob including at least one heating zone having several heating elements, a user interface for setting a heating capacity of the heating zone, and a control unit for operating the heating elements and for distributing the heating capacity among the heating elements according to a heating capacity distribution. In order to improve the efficiency of the hob, the control unit is configured to distribute the heating capacity among a larger number of heating elements when the heating capacity is below a threshold value than in the case, when the heating capacity is above the threshold value. The object of the present invention is to provide an economically viable solution to realize an induction cooking hob mentioned at the beginning of the description, through an array of assemblies of micro-inverters, preferably of the quasi resonant type.

EP3116288 discloses a method for controlling an induction cooking hob including a number of induction coils, wherein a heating process includes a plurality of subsequent fixed time cycles subdivided into one or more flexible time slots, and wherein each induction coil is driven by a dedicated induction generator.

According to the invention, the above object is reached thanks to the features defined by the independent claims 1 and 13 as well as the corresponding dependent claims.

In the induction cooking hob according to the invention, the plurality of inductors (coils) and related inverters are divided in a number of predetermined assemblies, a control system being configured to determine, on a periodic basis, the power characteristic curves for each inductor coupled with a superposed cooking utensil and to select groups of inductors which allow a working condition at the same frequency in order to deliver a requested power to the cooking utensil. The induction cooking hob according to the invention is preferably organized as a number M, preferably comprised between 4 and 15, of identical physical electronic boards, hereinafter called "string of inverters".

Said groups of inductors are preferably energized so that they do not belong to the same assembly of coils, the assemblies of inductors being preferably string of coils arranged in a row and column pattern.

The technical advantages of the solution according to the invention are as follows. First of all, each string of inductors can work with only one coil activated at a time; this avoids noise / beating problems within each string and allows the use of a single current sensor.

It is known that the typical maximum average power density of induction coils is comprised between 7 and 10 $W/cm^2$. According to the present invention, it is proposed that the average power of the inductors will be also comprised from 7 to 10 $W/cm^2$, however the peak power is to be comprised from 2 to 5 times, preferably 3 times the maximum average value.

By peak value we mean the maximum valued that can be reached at the minimum operating frequency admissible by the inverter.

For a coil of a preferred diameter of 80 mm, such design criteria would result in a maximum average power of $P_{max\_ave}$= 500 W and a peak power $P_{peak}$=1500 W, which is 3 times $P_{max\_ave}$.

Since the peak power of each coil is designed to be comprised between 2 to 5 times, preferably 3 times of its average power, this means that each coil is switched off for about 2/3 of the control period and this allows a coil construction with a low number of turns, which results in a coil which is much simpler to be assembled.

Another advantage of the present invention is that a plurality of inductors may be activated simultaneously although they do not necessarily relate to the same cooking utensil, which results in a much higher probability of finding a set of inductors sharing the same operating frequency range.

Further advantages and features according to the present invention will be clear from the following detailed description, provided as a not limiting example, with reference to the attached drawings in which:

- Figure 1 is a top view of a typical inductor coil organization in a flexible induction cooktop;

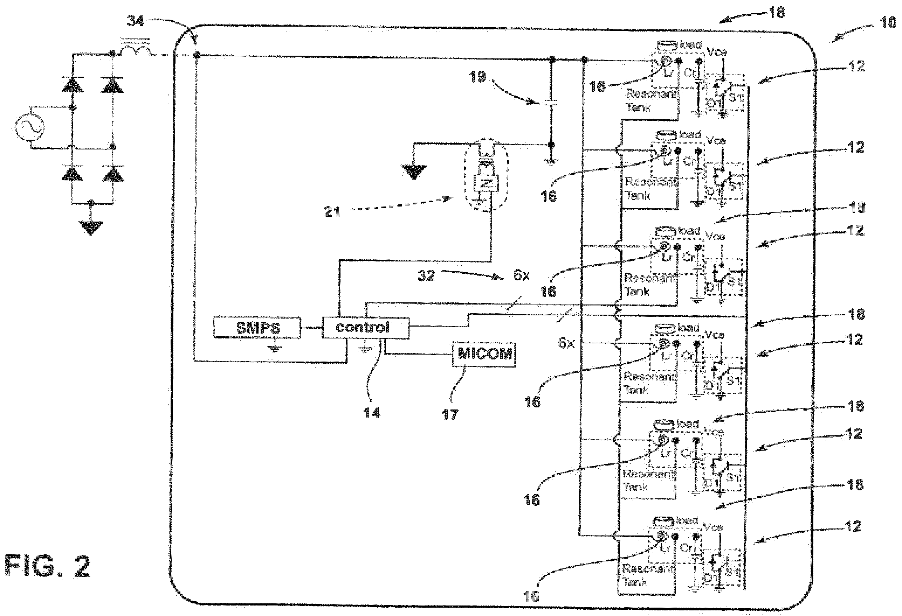

- Figure 2 shows an electronic architecture of a string of quasi resonant inverters coupled to an equivalent number of inductors in an induction cooktop according to the invention, where a bridge rectifier is common among multiple strings;
- Figure 3 is an array of strings of micro-inverters according to the invention;
- Figure 4 is a flowchart showing an "energy token" allocation algorithm according to the invention, and
- Figure 5 is a diagram power vs. frequency of three cells of the induction cooking hob of figures 1, 2 and 3 having zones of the frequency ranges in common.

With reference to the drawings, an induction cooking hob according to the invention comprises a plurality of assemblies in the form of strings 10 of quasi resonant inverters 12 or micro-inverters. Each string 10 comprises a microcontroller 14 configured to independently drive each of the inverters thereby providing an excitation signal to induction coils 16 in connection with the inverters 12. The controller 14 is further in communication with a plurality of thermistors (not shown) configured to detect a temperature of each heating zone 18 of each induction coil 16. The string 10 further comprises a DC bus capacitor 19 and an input current sensor 21. In this configuration, the microcontroller 14 may be configured to independently activate and monitor each of the heating zones 18. The microcontroller 14 comprises a plurality of gate drivers (not shown) and a plurality of Vce monitors 32-corresponding to each of the inverters 12. In this configuration, the microcontroller 14 may control the inverters 12 independently and monitor the operation of inverters 12 via the Vce monitors 32 and the input current sensor 21. As illustrated, the string 10 comprises N inverters 12 configured to independently control N induction coils 16. By combining a number M of the strings 10 together, a total of MxN induction coils can be controlled by the microcontrollers 14. Each of the string 10 comprises also a digital communication port 17.

In order to save costs, each of the inverters 12 of one string 10 may share the same DC-bus capacitor 19, the same input current monitor 21 and the same microcontroller 14 (preferably of the type of microcontroller, DSP, microcomputer or the like).

Each of the N inverters arranged within a string 10 is designed to supply an average power of up to 500 W and a peak power preferably comprised between 2 and 5, more preferably 3 times the average power. Thanks to that dimensioning, each inductor and each inverter will operate with a maximum duty cycle equal to the ratio between the average power and the peak power (i.e. 1/2 to 1/5). This will allow each string 10 to preferably operate with no more than one energized inductor at a time, thus inherently avoiding any acoustic beating phenomena within a string. Moreover, having preferably no more than one active inductor per string 10 at any time has the consequence that the input current measurement unambiguously refers to the sole cell active at that time, thus simplifying the power control. The associated inductors are to be designed with the same criteria.

Owing to the proposed cell peak power dimensioning, the power limit of a commercial 16 A or 20 A mains line distribution is reachable with no more than 3 cells simultaneously active.

Of course if more than one inductor 16 has to be activated for one string 10 at the same time, such inductors have to work at the same frequency for the same above reason. Each string 10 should conveniently drive one row or one column of adjacent inductors 16, but in general other combinations of non adjacent inductors could be envisaged (for instance circular crowns pattern).

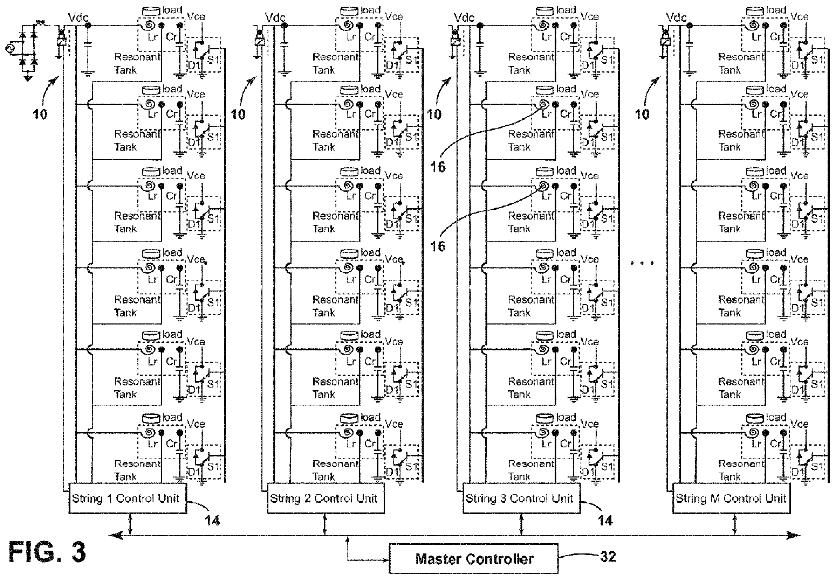

By combining a number $M$ of strings 10 together, a total of $M \times N$ induction coils 16 can be supplied by high frequency current, as shown in Figure 3, for the case of $M$ strings, each driving up to $N$=6 inductors 16.

Another advantage in designing an inductor having large peak power with respect to the average power is that its impedance can be much lower, resulting in a much smaller number of turns. A small number of turns has two advantages: a lower amount of copper and fewer layers are needed to accommodate the windings, resulting in lower eddy currents within the copper and consequently much higher electrical efficiency.

In the case where a cooking vessel lies over a number of cells supplied by different strings, it could be necessary that multiple cells fed by different strings are to be active at the same time. In order to prevent audible noise, it is then necessary to synchronize the operating frequencies between the strings 10. Therefore each of the $M$ digital controllers 14 are endowed with the digital communication port 17 to support the synchronization among the strings 10.

The synchronization could be advantageously put in place whenever adjacent strings 10 are active simultaneously but not performed otherwise.

In order to coordinate the staggered activation of each coil 16 within each string 10, the cooktop presents a master controller 32 that collects the electrical characteristics of each coil 16 associated to the inverters 12 and, based on that information, it computes an activation sequence of predetermined duration $T_{prog}$.

By activation sequence we mean a data structure representing the switching frequency of each coil 16, at each mains semi-period, over the duration $T_{prog}$ of the sequence.

By electrical characteristics of each coil 16, we mean the coil complex impedance vs. frequency or the power vs. frequency curve and the admissible range of operating frequencies of each inverter coupled with its coil and covered by a particular cooking utensil. It is therefore clear that when we refer to power vs. frequency curves we also mean complex impedance vs. frequency or vs. period as well.

The communication between the master controller 32 and the string control unit 14 is preferably implemented by a bidirectional communication bus. The communication bus will include the synchronization line mentioned before.

The synchronization among different strings 10 will be preferably designed to align both frequency and phase.

The activation sequence will be computed by an algorithm which is part of the present invention and will be subjected to the following functional constraints:

1. For every mains semi-cycle, each coil 16 will be either idle (off) or operating at a common frequency, equal for every cell being active in that mains semi-cycle;

2. Preferably no more than one cell/micro-inverter is to be active, at any given time per each string 10;

3. The average power delivered to each cell, averaged over $T_{prog}$, must be equal to its desired set point.

The master controller 32 can be either one discrete and distinct controller with respect to the $M$ string controllers or one of the $M$ string controllers 14 could be advantageously designated to perform the duties of the master controller.

In a 2 phase or 3 phase mains distribution system, the $M$ strings could be advantageously split into 2 or 3 groups in order to balance the power across the phases. For instance, an eight string cooktop rated for a maximum power of 7200 W at 230 V could be advantageously split into two groups of four strings, each group rated at a total power of 3600 W and each connected to a different mains phase.

Each group of strings will have one voltage rectifier, common to all the strings 10 connected to the same mains phase. Thanks to the common voltage rectifier, whenever at least one converter among all the converters attached to that particular phase is delivering power to at least one coil 16, the voltage across each of the DC-bus capacitors 19 will be discharged to near zero volts at every mains zero crossing, resulting in the beneficial effect of allowing the possibility to soft-start any of the inverters at the next mains semi-cycle, owing to the reduced bus capacitors Voltage in the vicinity of the mains zero crossing.

A far as the power control is concerned, considering the possibility of having an arbitrary number $K$ of pots placed on the cooking surface, each covering an arbitrary number of cells or inductors 16, the following preliminary steps will be performed in an induction cooktop according to the invention:

1) Determine $K$ clusters of cells, each cluster corresponding to a different cooking utensil (not shown);

2) Receive $K$ power set-points ($PP_1$, $PP_2$,.., $PP_K$) to be assigned to each pot.

3) Assign to each cell an individual power set-point. This could be performed, for instance, by dividing the pot set-point ($PP_x$) to the number of cells covered by that particular pot. This will result in having a power set-point assigned to each cell in the system ($PC_{11}$, $PC_{12}$,.., $PC_{MN}$)

Other power set-points allocation criteria are possible: for instance, a lower power could be delivered to the inner cells 16, or a power set point could be allocated based on the pot coverage factor. As far as the control method according to the invention is concerned, the power set-point allocation criteria are not relevant.

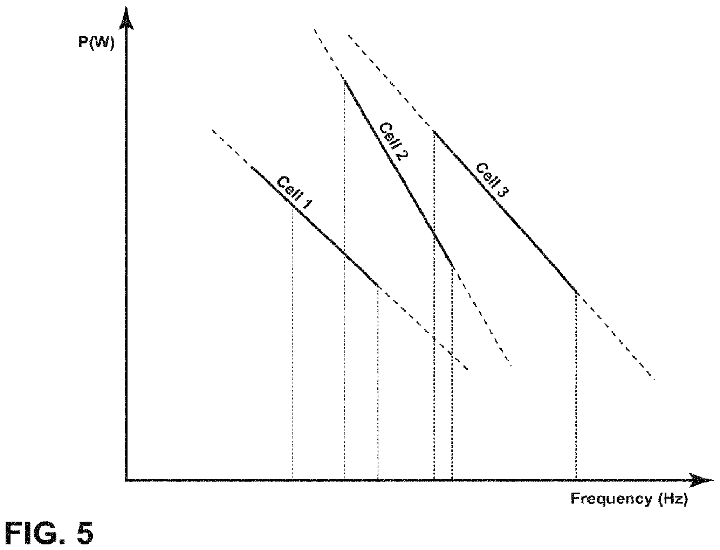

4) For every cell in the system covered by at least one pot, acquire the power vs. frequency curves, together with their admissible frequency operating ranges. It is important to notice that the admissible frequency ranges depend on the load characteristics and are in general different for the different cells. Considering a set of cells on the cooktop, the intersection of the corresponding admissible frequency range may exist in some cases, but it could be an empty set in other cases. If the intersection of these frequency ranges exists, the cells of the set may be activated simultaneously at the same frequency (iso-frequency, provided that the total power delivered by the cells does not exceed the maximum allowed power for the cooktop). Otherwise, the cells cannot be activated at the same frequency (iso-frequency). For instance, with reference to Figure 5, cell 1 may be activated at the same frequency with cell 2, and cell 2 may be activated at the same frequency with cell 3 (provided that the constraint on the maximum power for the cooktop is also satisfied). However, cell 1 and cell 3 cannot be activated at the same frequency.

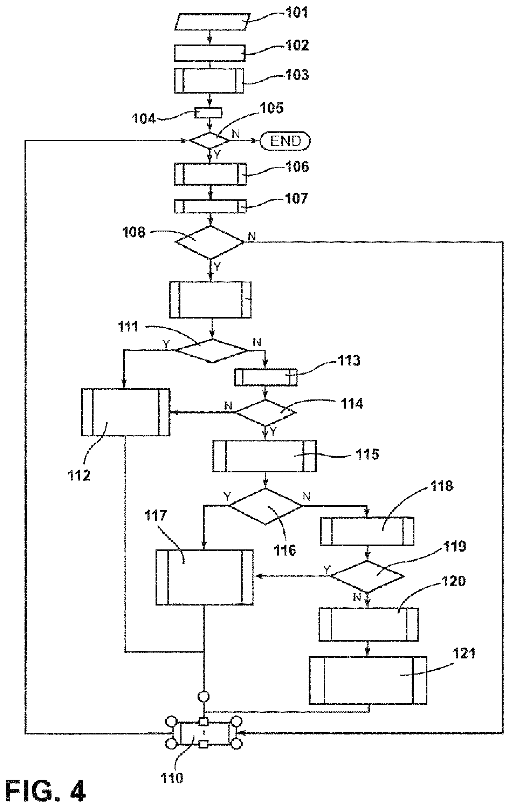

After these preliminary steps, the master controller 32 will perform the "energy token" allocation algorithm described in Figure 4. This algorithm performs the task of finding a cell activation sequence, hereinafter called the "song", which fulfils the functional constraints described before. The song defines the activation state of each cell/micro-inverter, at each mains semi-period and has a predefined duration $T_{prog}$, corresponding to an integer number of mains semi-periods. An integer number $T$ in the range 1,... $T_{prog}$ represents the index of the current *page of the song*, with respect to the duration of the song. $T_{prog}$, can be conveniently set as an odd number preferably comprised from 51 to 501 mains semi-periods. A preferred value for $T_{prog}$ is 101.

Once the energy token allocation has been performed, a valid "song" is available to be "played" by each string controller 14. Then, the master controller 32 sends to each of the string controllers 14 the corresponding sub-song, via the communication bus.

When each string controller 14 has received its own sub-song, the system can start the execution of the song, in a synchronized way, starting from the first page. When the last page is over (i.e. $T = T_{prog}$), the song is repeated again, starting from the first page.

In a preferred embodiment, the system reacquires periodically the power vs. frequency curve and the admissible frequency operating range for each coil 16 and then recalculates a new song, using the new load curves (power vs. frequency).

In order to manage sudden load variations, caused by external factors, such as mains line swells or surges or pot movements, each individual string controller 14 has the faculty to momentarily deviate from the currently valid song, for instance by skipping one or more pages. Should this happen, the string controller will notify the master controller 32 of the exception, thus triggering an appropriate action. In a preferred embodiment, the appropriate action will be to wait until a stable electrical condition is reached and then the system reacquires a fresh set of power vs. frequency curves and admissible operating ranges, and finally applies the energy token allocation algorithm again.

The energy token allocation algorithm is here described for a mono-phase configuration for the sake of notational simplicity. In a multi-phase configuration, the algorithm may be executed independently on the different phases.

With reference to the algorithm of figure 4, the first step 101 is used to define both the set power of each single cell and the characteristic curve power vs. frequency for each cell:

get $PC_{11}$, $PC_{12}$, ..., $PC_{MN}$
where $PC_{ij}$ is the power set-point for the cell (i,j), i.e. the j-th coil of the i-th string
get $P_{11}(f)$, $P_{12}(f)$,.., $P_{MN}(f)$
where $P_{ij}(f)$ is the power vs. frequency curve for the cell in position i,j. Each power vs. frequency curve has associated minimum and maximum operating frequencies $f_{min}(i,j)$ and $f_{max}(i,j)$, respectively that define the admissible operating frequency range [$f_{min}(i,j)$, $f_{max}(i,j)$] for the coil in position (i,j).

Then in step 102 the overall average Power for the mains phase is determined as:

$$P_{ave} = \Sigma\, PC_{ij}$$

In step 103 the energy residual matrix $Er(i,j,0)$ is computed. The entry $Er(i,j,T)$ in the energy residual matrix represents the energy that still has to be delivered in the pages from T+1 to $T_{prog}$ by the cell (i,j) in order to achieve an average power $Pr(i,j)$ on the cell (i,j) in the duration of the song 1,2,...,$T_{prog}$.

It is convenient in the algorithm to quantify energy in terms of W * MSP instead of Joules, where MSP is the duration of the mains supply period. Thus, the matrix $Er(i,j,0)$ for the index T=0 is computed as $Er(i,j,0) = PC_{ij}*T_{prog}$.

Furthermore, the total Energy $E_{tot}(0)$ delivered on the mains phase at page index T=0 is set to:

$$E_{tot}(0) = 0$$

$E_{tot}(T)$ represents the total energy already delivered on all the strings connected to the mains phase in the intervals 1,2...T. Thus, for T = 0, $E_{tot}(T)$ is set to 0 for convenience.

In step 104 the page index is initialized with T = 1.

In the comparison step 105 it is assessed whether the current page index T is higher than $T_{prog}$. If T is higher than $T_{prog}$ the program ends, if it is lower or equal, then in step 106 the desired power $P_{des}(T)$ which has to be delivered in the interval T is found as:

$$P_{des}(T) = (P_{ave} * T - E_{tot}(T-1)\,)\, /\, 1MSP$$

This is the power that has to be delivered in the page T in order to satisfy the power request for all coils 16 connected to the same mains phase in the control period of length $T_{prog}$.

In the subsequent step 107 the most critical cell is identified as:

$$mc = (mc_i,\, mc_j)$$

where such cell has the highest energy debt. The debt of a cell 16 is a weighted sum of absolute energy error $Er(i,j,T)$ and relative energy error $Er(i,j,T)/Er(i,j, 0)$ at any given moment T over the course of the song of length $T_{prog}$. In the following comparison step 108 it is assessed whether the most critical cell mc has a positive energy residual. If the assessment is negative, then there are no cells left with positive energy residual and therefore it is necessary to wait for the end of the control period (step 110).

If the above assessment is positive, a frequency $f_1$ is found such that the power delivered by mc at $f_1$, i.e. $P_1 = P(mc, f_1)$, is as close as possible to $P_{des}(T)$.

In the subsequent comparison step 111 it is assessed whether the above power delivered by the most critical cell is overpassing $P_{des}(T)$ by considering a certain small tolerance $P_{tol}$, of the order of 50 W:

$$P_1 >= P_{des}(T) - P_{tol}$$

If the result of such comparison is positive, then in step 112 the most critical cell mc is activated alone at frequency $f_1$ to deliver power $P_1$. In step 112 residual energy matrix is updated:

$$Er(mc,T) = Er(mc,T-1) - P(mc, f_1) * 1MSP$$

and total energy delivered is updated:

$$E_{tot}(T) = E_{tot}(T-1) + P_1 * 1MSP$$

If the result of the comparison in step 111 is negative, then in this case the most critical cell needs the help of a "friend" to deliver the required desired power. With the term "friend" we mean another cell 16 belonging to another string 10 whose frequency range has at least one point in common with the cell. In order to be a "friend", a cell must have a positive (non-zero) residual energy to be delivered. Moreover a friend of a cell should be activated together with the cell without exceeding the power limit.

Therefore in step 113 the first most critical friend mcf is identified:

$$mcf = (mcf_i, mcf_j)$$

In the check step 114 it is assessed whether at least a common friend exists. If this condition is not verified, then the most critical cell has no other chance than doing the job alone (step 112). Otherwise, when at least a common friend exists, in step 115 frequency $f_2$ is found such that the total power delivered by the two cells at $f_2$ is:

$$P_2 = P(mc, f_2) + P(mcf, f_2)$$

and it is as close as possible to $P_{des}(T)$.

Of course in step 115 the minimum frequency must also fulfill the constraint of not exceeding the maximum Total Power.

In the subsequent comparison step 116 it is checked whether the power delivered by the two cells 16 $P_2$ is higher than $P_{des}(T)$ by considering a certain small tolerance $P_{tol}$, of the order of 50 W (as in step 111):

$$P_2 \geq P_{des} - P_{tol}$$

In the affirmative, the most critical cell does not need another friend to deliver the average power; in this case in step 117 the following actions are performed:

- activate the most critical cell mc together with the most critical friend mcf at frequency $f_2$ to deliver a total power $P_2$;
- update residual energy matrix

$$Er(mc,T) = Er(mc,T-1) - P(mc, f_2) * 1MSP$$

$$Er(mcf,T) = Er(mcf,T-1) - P(mcf, f_2) * 1MSP$$

- and update total energy delivered:

$$E_{tot}(T) = E_{tot}(T-1) + P_2 * 1MSP$$

If in step 116 $P_2 < P_{des} - P_{tol}$, then in this case the most critical cell mc needs to search for a third "common friend", i.e. another friend of mc that is also friend of mcf, to deliver the average power. Therefore in step 118 the most critical common friend cf of mc and mcf is identified

$$cf = (cf_i, cf_j)$$

If in the check step 119 a common friend cf exists, then in step 120 a frequency $f_3$ is found such that the total power delivered by mc, mcf, and cf is as follows:

$$P_3 = P(mc, f_3) + P(mcf, f_3) + P(cf, f_3)$$

and it is as close as possible to $P_{des}(T)$.

If in step 119 a common friend is not found, then the most critical cell and the most critical friend have no other chance than doing the job by themselves, as shown in step 117. Downstream step 120, in step 121 the three friend cells mc, mcf, and cf are activated altogether at frequency $f_3$ to deliver a total power $P_3$:

Update residual energy matrix

$$Er(mc,T) = Er(mc,T-1) - P(mc, f_3) * 1MSP$$

$$Er(mcf,T) = Er(mcf,T-1) - P(mcf, f_3) * 1MSP$$

$$Er(cf,T) = Er(cf,T-1) - P(cf, f_3) * 1MSP$$

Update total energy delivered:

$$E_{tot}(T) = E_{tot}(T-1) + P_3 * 1MSP$$

In step 110 cycle time is updated for starting a new iteration at step 105 for a subsequent mains semi period.

The peculiarity of the proposed method is that, at every instant of the control period, a plurality of inductors may be activated simultaneously irrespectively from their association to an overlying cooking utensil but only according to the at least partial overlapping of the associated operating frequency ranges.

Another peculiarity of the proposed method is that the number of cells being active simultaneously at every time instant is not larger than 3 per each mains phase, owing to the particular power sizing of each cell in excess of 1500 W. This results in a much larger probability of finding triplets of cells having common operating frequency range with respect to the case of larger clusters.

Of course the algorithm described above with reference to figure 4 is only an example and can be designed in a different way or may comprise some variants, without departing from the solution according to the invention.

For instance, instead of considering friend of a cell only, it is possible to use also a "brother" of a cell where two or more cell 16 of a single string 10 can be activated at the same time. In this regard a brother of a cell is another cell belonging to the same string 10, whose frequency range has at least one point in common with the cell.

## Claims

1. Method for operating an induction cooking hob (A),

   the induction cooking hob (A) comprising:

   a plurality of inductors (16) each associated with a related induction resonant inverter (12) operating in load-dependent frequency ranges, the plurality of inductors (16) and related induction resonant inverters (12) being divided in predetermined assemblies (10),
   a control system comprising one controller (14) for each assembly and a master controller (32) for controlling said controllers (14); wherein the controller is configured to independently drive each of the induction resonant inverters (12), wherein each of the induction resonant inverters (12) is supplied by a common rectifying circuit, so that a multi-zone induction heating cooking hob (A) is provided;

   **characterized in that** the method comprises the step of activating simultaneously a set of inductors of the plurality of inductors (16), and the step of considering, for each inductor of said inductors (16) coupled with a superposed cooking utensil, an intersection of said operating load-dependent frequency ranges, wherein the step of activating simultaneously is carried out independently from association of said set of inductors to a same overlying cooking utensil and only according to said intersection of said operating load-dependent frequency ranges, provided that the total power delivered by the cells does not exceed the maximum allowed power for the cooktop.

2. Method according to claim 1, wherein the at least one controller (14) of said assemblies (10) being controlled by the master controller (32) of said control system in order to activate the inductors (16) for complying with a target power to be delivered to one or more cooking utensils randomly placed on the induction cooking hob (A).

3. Method according to claim 1 or 2, wherein it comprises the steps of:

- assessing what is the overall power to be delivered by each inductor (16);
- acquiring power vs. frequency curve for each inductor (16) covered by a cooking utensil and the associated operating frequency range; and
- identifying a data structure representing a switching frequency of each of said inductors (16) at each mains semi-period so that each inductor can be activated alone or in combination with inductors of the same assembly (10) or of different assemblies (10) in order to deliver the assessed power by each single inductor (16), with the proviso that when more than one inductor (16) is activated at the same time, they are working at a same frequency.

4. Method according to any of the preceding claims, wherein the step of acquiring power vs. frequency curves of each inductor (16) is carried out periodically.

5. Method according to any of the preceding claims, wherein it comprises the identification of the inductor (16) with the highest debt of energy or average power to be delivered.

6. Method according to any of the preceding claims, wherein it comprises the identification of an inductor (16) belonging to an assembly (10) whose operating frequency range overlaps with the operating frequency ranges of a least number of other inductors of said inductors (16).

7. Method according to claim 6, wherein it comprises a subsequent identification of another inductor (16) belonging to another assembly (10) having a high debt of energy or power and which can work at the same frequency of a first inductor (16) of said inductors (16).

8. Method according to claim 7, wherein it comprises an identification of a third inductor (16) belonging to further another assembly (10) having a high debt of energy or average power and which can work at the same frequency of the first and second inductors (16).

9. Method according to any of claims 1-8, wherein when adjacent assemblies (10) are activated simultaneously, synchronization among the assemblies (10) is performed.

10. Method according to any of claims 1-9, wherein the assemblies (10) of inductors (16) are string of coils arranged in a row and column pattern.

11. Method according to any of claims 2-10, wherein a single inductor (16) is activated at a time for each assembly (10).

12. Method according to any of the preceding claims, wherein the resonant inverters (12) are activated in the vicinity of mains zero crossing.

13. Induction cooking hob comprising:

a plurality of inductors (16) each associated with a related induction resonant inverter (12) operating in load-dependent frequency ranges, the plurality of inductors (16) and related induction resonant inverters (12) being divided in predetermined assemblies (10);
a control system comprising one controller (14) for each assembly and a master controller (32) for controlling said controllers (14); wherein the controller is configured to independently drive each of the induction resonant inverters (12), wherein each of the induction resonant inverters (12) is supplied by a common rectifying circuit so that a multi-zone induction heating cooker (A) is provided;
**characterized in that** said control system is configured to operate the induction cooking hob (A) according to the method of claim 1.

14. Induction cooking hob according to claim 13, wherein said groups of inductors (16) are selected so that they comprise inductors (16) belonging to different predetermined assemblies (10).

**15.** Induction cooking hob according to claim 13 or 14, wherein the assemblies (10) of inductors (16) are string of coils arranged in a row and column pattern.

**16.** Induction cooking hob according to any of claims 13-15, wherein the control system is configured to identify, on the basis of a requested set power, what is the total energy or power to be delivered by each inductor (16) for a predetermined control period (Tprog), and to sequentially estimate what is the residual energy to be delivered by each single inductor (16) so that the combination of progressive groups of inductors (16) are activated in order to reduce such residual energy.

**17.** Induction cooking hob according to any of claims 13-16, wherein each inductor (16) has a peak power which is from 2 to 8 times the average power.

**18.** Induction cooking hob according to claim 17, wherein each inductor (16) has a peak power which is from 3 to 6 times the average power.

**19.** Induction cooking hob according to claim 17 or 18, wherein each inductor (16) has a peak power of about 1500 W.

**Patentansprüche**

**1.** Verfahren zum Betreiben eines Induktionskochfelds (A),

wobei das Induktionskochfeld (A) umfasst:

eine Mehrzahl von Induktoren (16), die jeweils mit einem zugehörigen Induktionsresonanz-Inverter (12) in Beziehung stehen, die in lastabhängigen Frequenzbereichen arbeiten, wobei die Mehrzahl von Induktoren (16) und die zugehörigen Induktionsresonanz-Inverter (12) in vorbestimmte Baugruppen (10) unterteilt sind, ein Steuersystem, das einen Controller (14) für jede Baugruppe und einen Master-Controller (32) zum Steuern der Controller (14) umfasst;

wobei der Controller ausgestaltet ist, um jeden der Induktionsresonanz-Inverter (12) unabhängig anzusteuern, wobei jeder der Induktionsresonanz-Inverter (12) von einer gemeinsamen Gleichrichterschaltung versorgt wird, so dass ein Mehrzonen-Induktionskochfeld (A) zur Verfügung gestellt wird; **dadurch gekennzeichnet, dass** das Verfahren den Schritt des gleichzeitigen Aktivierens eines Satzes von Induktoren der Mehrzahl von Induktoren (16) und den Schritt des Berücksichtigens, für jeden Induktor der Induktoren (16), der mit einem darüber liegenden Koch-Utensil gekoppelt ist, einer Schnittmenge der betriebslastabhängigen Frequenzbereiche umfasst, wobei der Schritt des gleichzeitigen Aktivierens unabhängig von der Zuordnung des Satzes von Induktoren zu einem gleichen darüber liegenden Koch-Utensil und nur entsprechend der Schnittmenge der betriebslastabhängigen Frequenzbereiche durchgeführt wird, vorausgesetzt, dass die von den Zellen gelieferte Gesamtleistung die maximal zulässige Leistung für das Kochfeld nicht überschreitet.

**2.** Verfahren nach Anspruch 1, wobei der mindestens eine Controller (14) der Baugruppen (10) von dem Master-Controller (32) des Steuersystems gesteuert wird, um die Induktoren (16) zu aktivieren, um mit einer Zielleistung übereinzustimmen, die an ein oder mehrere Koch-Utensilien abgegeben werden soll, die zufällig auf dem Induktionskochfeld (A) platziert sind.

**3.** Verfahren nach Anspruch 1 oder 2, umfassend die Schritte:

- Ermitteln, was die von jedem Induktor (16) zu liefernde Gesamtleistung ist;
- Erfassen der Leistungs-Frequenz-Kurve für jeden Induktor (16), der von einem Koch-Utensil überdeckt wird, und des zugehörigen Betriebsfrequenzbereichs; und
- Identifizieren einer Datenstruktur, die eine Schaltfrequenz von jedem der Induktoren (16) bei jeder Netz-Halbperiode darstellt, so dass jeder Induktor allein oder in Kombination mit Induktoren derselben Baugruppe (10) oder unterschiedlichen Baugruppen (10) aktiviert werden kann, um die ermittelte Leistung durch jeden einzelnen Induktor (16) liefern zu können, mit der Maßgabe, dass, wenn mehr als ein Induktor (16) gleichzeitig aktiviert wird, diese mit derselben Frequenz arbeiten.

**4.** Verfahren nach einem der vorherigen Ansprüche, wobei der Schritt des Erfassens von Leistungs-Frequenz-Kurven jedes Induktors (16) periodisch durchgeführt wird.

5. Verfahren nach einem der vorherigen Ansprüche, ferner umfassend die Identifizierung des Induktors (16) mit dem höchsten Energiebedarf oder durchschnittlichen zu liefernden Leistung.

6. Verfahren nach einem der vorherigen Ansprüche, ferner umfassend die Identifizierung eines Induktors (16), der zu einer Baugruppe (10) gehört, deren Betriebsfrequenzbereich sich mit den Betriebsfrequenzbereichen einer geringsten Anzahl anderer Induktoren der Induktoren (16) überschneidet.

7. Verfahren nach Anspruch 6, ferner umfassend eine nachfolgende Identifizierung eines weiteren Induktors (16), der zu einer anderen Baugruppe (10) gehört, der einen hohen Energiebedarf oder Leistung hat und mit derselben Frequenz wie ein erster Induktor (16) der Induktoren (16) arbeiten kann.

8. Verfahren nach Anspruch 7, ferner umfassend eine Identifizierung eines dritten Induktors (16), der zu einer weiteren anderen Baugruppe (10) gehört, der einen hohen Energiebedarf oder eine durchschnittliche Leistung hat und die mit derselben Frequenz wie der erste und zweite Induktor (16) arbeiten kann.

9. Verfahren nach einem der Ansprüche 1 - 8, wobei, wenn benachbarte Baugruppen gleichzeitig aktiviert werden, eine Synchronisation unter den Baugruppen (10) durchgeführt wird.

10. Verfahren nach einem der Ansprüche 1 - 9, wobei die Baugruppen (10) von Induktoren (16) eine Reihe von Spulen sind, die in einem Reihen- und Spaltenmuster angeordnet sind.

11. Verfahren nach einem der Ansprüche 2 - 10, wobei ein einzelner Induktor (16) zu einer Zeit für jede Baugruppe (10) aktiviert wird.

12. Verfahren nach einem der vorherigen Ansprüche, wobei die Resonanz-Inverter (12) in der Nähe eines Netz-Nulldurchgangs aktiviert werden.

13. Induktionskochfeld, umfassend:

eine Mehrzahl von Induktoren (16), die jeweils mit einem zugehörigen Induktionsresonanz-Inverter (12) in Beziehung stehen, die in lastabhängigen Frequenzbereichen arbeiten, wobei die Mehrzahl von Induktoren (16) und die zugehörigen Induktionsresonanz-Inverter (12) in vorbestimmte Baugruppen (10) unterteilt sind; ein Steuersystem, das einen Controller (14) für jede Baugruppe und einen Master-Controller (32) zum Steuern der Controller (14) umfasst; wobei der Controller ausgestaltet ist, um jeden der Induktionsresonanz-Inverter (12) unabhängig anzusteuern, wobei jeder der Induktionsresonanz-Inverter (12) von einer gemeinsamen Gleichrichterschaltung versorgt wird, so dass ein Mehrzonen-Induktionskochfeld (A) zur Verfügung gestellt wird; **dadurch gekennzeichnet, dass** das Steuersystem ausgestaltet ist, um das Induktionskochfeld (A) gemäß dem Verfahren nach Anspruch 1 zu betreiben.

14. Induktionskochfeld nach Anspruch 13, wobei die Gruppen von Induktoren (16) so ausgewählt sind, dass sie Induktoren (16) umfassen, die zu unterschiedlichen vorbestimmten Baugruppen (10) gehören.

15. Induktionskochfeld nach Anspruch 13 oder 14, wobei die Baugruppen (10) von Induktoren (16) eine Reihe von Spulen sind, die in einem Reihen- und Spaltenmuster angeordnet sind.

16. Induktionskochfeld nach einem der Ansprüche 13 - 15, wobei das Steuersystem ausgestaltet ist, um auf Basis einer angeforderten Sollleistung zu identifizieren, was die die Gesamtenergie oder -leistung ist, die von jedem Induktor (16) für einen vorbestimmten Steuerungsperiode (Tprog) geliefert werden soll, und um sequenziell zu schätzen, was die Restenergie ist, die von jedem einzelnen Induktor (16) geliefert werden soll, so dass die Kombination aus progressiven Gruppen von Induktoren (16) aktiviert wird, um diese Restenergie zu reduzieren.

17. Induktionskochfeld nach einem der Ansprüche 13 - 16, wobei jeder Induktor (16) eine Spitzenleistung hat, die zwischen dem 2-fachen und 8-fachen der Durchschnittsleistung beträgt.

18. Induktionskochfeld nach Anspruch 17, wobei jeder Induktor (16) eine Spitzenleistung hat, die zwischen dem 3-fachen und 6-fachen der Durchschnittsleistung beträgt.

**19.** Induktionskochfeld nach Anspruch 17 oder 18, wobei jeder Induktor (16) eine Spitzenleistung von etwa 1500 W hat.

**Revendications**

**1.** Procédé de fonctionnement d'une plaque de cuisson à induction (A),

la plaque de cuisson à induction (A) comprenant:

une pluralité de bobine d'induction (16) chacune associée à un convertisseur résonant d'induction (12) associé, fonctionnant dans des plages de fréquences dépendantes de la charge, la pluralité de bobines d'induction (16) et de convertisseurs résonants d'induction (12) associés étant divisée en ensembles (10) prédéterminés,
un système de commande comprenant un contrôleur (14) pour chaque ensemble et un contrôleur maître (32) pour contrôler lesdits contrôleurs (14); dans lequel le contrôleur est configuré pour entraîner indépendamment chacun des convertisseurs résonants d'induction (12), dans lequel chacun des convertisseurs résonants d'induction (12) est alimenté par un circuit de rectification commun, de sorte qu'une plaque de cuisson à induction (A) à multiples zones est fournie;

**caractérisé en ce que** le procédé comprend l'étape d'activation simultanément d'un ensemble de bobines d'induction de la pluralité de bobines d'induction (16), et l'étape de prise en considération, pour chaque bobine d'induction desdites bobines d'induction (16) couplées à un ustensile de cuisson superposé, une intersection desdites plages de fréquences de fonctionnement dépendantes de la charge, dans lequel l'étape d'activation simultanément est exécutée indépendamment de l'association dudit ensemble de bobines d'induction à un même ustensile de cuisson qui les recouvre et uniquement selon ladite intersection desdites plages de fréquences de fonctionnement dépendantes de la charge, à condition que la puissance totale délivrée par les cellules n'excède pas la puissance maximale autorisée pour la plaque de cuisson.

**2.** Procédé selon la revendication 1, dans lequel le au moins un contrôleur (14) desdits ensembles (10) étant contrôlé par le contrôleur maître (32) dudit système de commande afin d'activer les bobines d'induction (16) afin de conformer à une puissance cible à délivrer à un ou plusieurs ustensiles de cuisson placés de manière aléatoire sur la plaque de cuisson à induction (A).

**3.** Procédé selon la revendication 1 ou 2, qui comprend les étapes consistant à:

- évaluer la puissance totale à délivrer par chaque bobine d'induction (16);
- acquérir une courbe puissance/fréquence pour chaque bobine d'induction (16) recouverte par un ustensile de cuisson et la plage associée de fréquences de fonctionnement; et
- identifier une structure de données représentant une fréquence de commutation pour chacune desdites bobines d'induction (16) à chaque demipériode du réseau de sorte que chaque bobine d'inductance peut être activée seule ou en combinaison avec des bobines d'inductance du même ensemble (10) ou d'ensembles (10) différents afin de délivrer la puissance estimée pour chaque bobine d'induction (16) unique, à condition que lorsque plus d'une bobine d'induction (16) est activée en même temps, elles fonctionnent à une même fréquence.

**4.** Procédé selon l'une quelconque des revendications précédentes, dans lequel l'étape d'acquisition des courbes puissance/fréquence de chaque bobine d'induction (16) est exécutée périodiquement.

**5.** Procédé selon l'une quelconque des revendications précédentes, qui comprend l'identification de la bobine d'induction (16) ayant la dette d'énergie ou la puissance moyenne à délivrer la plus élevée.

**6.** Procédé selon l'une quelconque des revendications précédentes, qui comprend l'identification d'une bobine d'induction (16) appartenant à un ensemble (10) dont la plage de fréquences de fonctionnement chevauche les plages de fréquences de fonctionnement d'un nombre moindre d'autres bobines d'induction desdites bobines d'induction (16).

**7.** Procédé selon la revendication 6, qui comprend une identification ultérieure d'une autre bobine d'induction (16) appartenant à un autre ensemble (10) ayant une dette d'énergie ou de puissance élevée et qui peut fonctionner à la même fréquence qu'une première bobine d'induction (16) desdites bobines d'induction (16).

8. Procédé selon la revendication 7, qui comprend une identification d'une troisième bobine d'induction (16) appartenant à encore un autre ensemble (10) ayant une dette d'énergie ou une puissance moyenne élevée et qui peut fonctionner à la même fréquence que la première et la seconde bobine d'induction (16).

9. Procédé selon l'une quelconque des revendications 1 à 8, dans lequel lorsque des ensembles (10) adjacents sont activés simultanément, une synchronisation parmi les ensembles (10) est effectuée.

10. Procédé selon l'une quelconque des revendications 1 à 9, dans lequel les ensembles (10) de bobines d'induction (16) sont des chaînes de bobines agencés selon un motif de rangée et de colonne.

11. Procédé selon l'une quelconque des revendications 2 à 10, dans lequel une bobine d'induction (16) unique est activée à la fois pour chaque ensemble (10).

12. Procédé selon l'une quelconque des revendications précédentes, dans lequel les convertisseurs résonants (12) sont activés à proximité du passage par zéro du réseau.

13. Plaque de cuisson à induction comprenant:

une pluralité de bobines d'induction (16) chacune associée à un convertisseur résonant d'induction (12) associé, fonctionnant dans des plages de fréquences dépendantes de la charge, la pluralité de bobines d'induction (16) et de convertisseurs résonants d'induction (12) associés étant divisée en ensembles (10) prédéterminés;
un système de commande comprenant un contrôleur (14) pour chaque ensemble et un contrôleur maître (32) pour contrôler lesdits contrôleurs (14); dans lequel le contrôleur est configuré pour entraîner indépendamment chacun des convertisseurs résonants par induction (12), dans lequel chacun des convertisseurs résonants d'induction (12) est alimenté par un circuit de rectification commun de sorte qu'une cuisinière à induction (A) à multiples zones est fournie;
**caractérisée en ce que** ledit système de commande est configuré pour faire fonctionner la plaque de cuisson à induction (A) selon le procédé de la revendication 1.

14. Plaque de cuisson à induction selon la revendication 13, dans laquelle lesdits groupes de bobines d'induction (16) sont sélectionnés de sorte qu'ils comprennent des bobines d'inductance (16) appartenant à différents ensembles (10) prédéterminés.

15. Plaque de cuisson à induction selon la revendication 13 ou 14, dans laquelle les ensembles (10) de bobines d'induction (16) sont des chaînes de bobines agencés selon un motif de rangée et de colonne.

16. Plaque de cuisson à induction selon l'une quelconque des revendications 13 à 15, dans laquelle le système de commande est configuré pour identifier, sur la base d'une puissance de consigne requise, quelle est l'énergie ou la puissance totale à délivrer par chaque bobine d'induction (16) pour une période de contrôle prédéterminée (Tprog), et pour estimer séquentiellement quelle est l'énergie résiduelle à délivrer par chaque bobine d'induction (16) unique de sorte que la combinaison de groupes progressifs de bobines d'induction (16) est activée afin de réduire une telle énergie résiduelle.

17. Plaque de cuisson à induction selon l'une quelconque des revendications 13 à 16, dans laquelle chaque bobine d'induction (16) présente une puissance de crête qui est de 2 à 8 fois la puissance moyenne.

18. Plaque de cuisson à induction selon la revendication 17, dans laquelle chaque bobine d'induction (16) présente une puissance de crête qui est de 3 à 6 fois la puissance moyenne.

19. Plaque de cuisson à induction selon la revendication 17 ou 18, dans laquelle chaque bobine d'induction (16) présente une puissance de crête d'environ 1500 W.

FIG. 1

FIG. 2

FIG. 3

**FIG. 4**

FIG. 5

**EP 3 432 682 B1**

**Patent documents cited in the description**

- EP 2252130 A
- WO 1997037515 A1
- EP 2095686 A
- EP 2352359 A
- US 2010282740 A
- WO 2016010492 A1
- EP 2416621 A
- US 2011240632 A
- EP 2914059 A
- US 2011272397 A
- EP 3116288 A